(19) **Europäisches Patentamt**

**European Patent Office**

**Office européen des brevets**

(11) **EP 1 638 091 A1**

(12) **EUROPEAN PATENT APPLICATION**
published in accordance with Art. 158(3) EPC

(43) Date of publication:
**22.03.2006 Bulletin 2006/12**

(51) Int Cl.:
*G11B 7/0045* (2000.01)    *G11B 7/125* (1985.01)

(21) Application number: **04746511.7**

(86) International application number:
**PCT/JP2004/009042**

(22) Date of filing: **21.06.2004**

(87) International publication number:
**WO 2005/008645 (27.01.2005 Gazette 2005/04)**

(84) Designated Contracting States:
**DE FR GB NL**

(30) Priority: **25.06.2003 JP 2003181496**

(71) Applicant: **MATSUSHITA ELECTRIC INDUSTRIAL CO., LTD.**
**Kadoma-shi, Osaka 571-8501 (JP)**

(72) Inventors:
• **IMURA, Masaharu**
  **Osaka 572-0024 (JP)**
• **TASAKA, Shuichi**
  **Hyogo 665-0847 (JP)**

(74) Representative: **Jeffrey, Philip Michael**
  **Frank B. Dehn & Co.**
  **179 Queen Victoria Street**
  **London EC4V 4EL (GB)**

(54) **OPTICAL INFORMATION RECORDING/REPRODUCING DEVICE AND RECORDING LIGHT INTENSITY LEARNING METHOD**

(57)    There is provided an optical information recording/reproducing apparatus that learns a recording power so as to determine an optimum recording condition under which the recording power is prevented from being excessively high and waveform distortion is reduced. A recording power variation circuit (12) sets variably a recording power Po in a front-end portion and a rear-end portion of a record pattern for learning a power that is output from a record pattern generation circuit (5) and a recording power Pm in an intermediate portion, while maintaining a ratio between the recording powers Po and Pm at a constant value, and data for learning a recording power are recorded. When the data for learning a recording power are reproduced, an allowable power range determination circuit (11) determines an allowable range of a recording power such that a recording power calculated by a power calculation circuit (8) using a degree of modulation detected from a reproduced signal and an allowable upper limit degree of modulation is an upper limit and a recording power calculated by an allowable waveform distortion power calculation circuit (10) using a waveform distortion amount detected from a reproduced signal and an allowable waveform distortion amount is a lower limit.

FIG.1

**Description**

Technical Field

The present invention relates to an optical information recording/reproducing apparatus for recording/reproducing information on an optical recording medium and a method for learning the recording light intensity for recording information.

Background Art

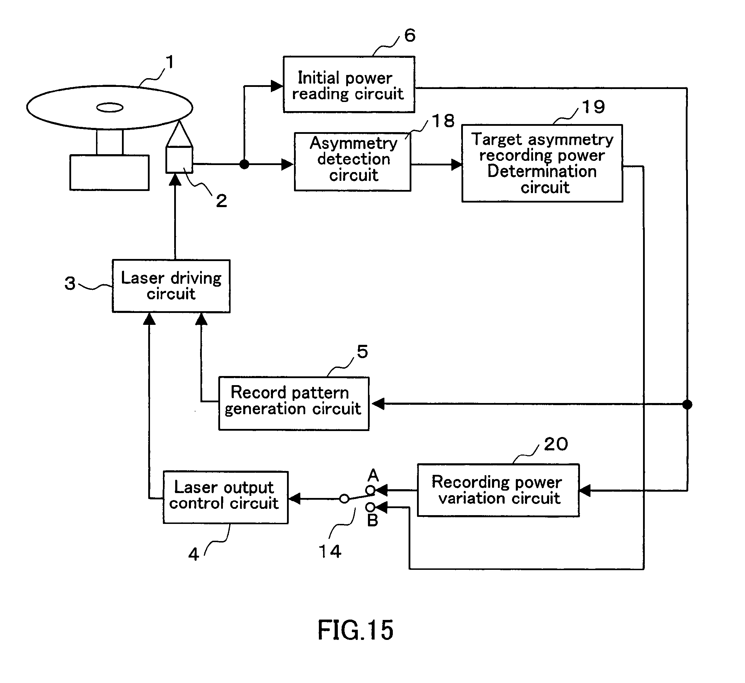

Hereinafter, a conventional optical information recording/reproducing apparatus and method for learning the recording light intensity will be described with reference to FIGs. 15 to 21.

FIG. 15 is a block diagram showing an exemplary configuration of a conventional optical information recording/reproducing apparatus (see, for example, JP 7(1995)-833261 A). In FIG. 15, the optical information recording/reproducing apparatus includes an optical disk 1 as an optical recording medium, a pickup 2 equipped with a laser diode for irradiating the optical disk 1 with a light beam, a laser driving circuit 3 for driving the laser diode in the pickup 2, a laser output control circuit 4 for instructing the laser driving circuit 3 to produce a desired laser output, an initial power reading circuit 6 for reading out an initial recording power recorded on the optical disk 1, a recording power variation circuit 20 for varying a recording power based on the readout initial recording power, an asymmetry detection circuit 18 for detecting an asymmetry value indicating a symmetric property of a reproduced signal from a record pattern recorded on the optical disk 1, a target asymmetry recording power determination circuit 19 for determining a recording power that allows a desired asymmetry value to be achieved based on the detected asymmetry value, and a record pattern generation circuit 5 for generating a record pattern to be recorded on the optical disk 1.

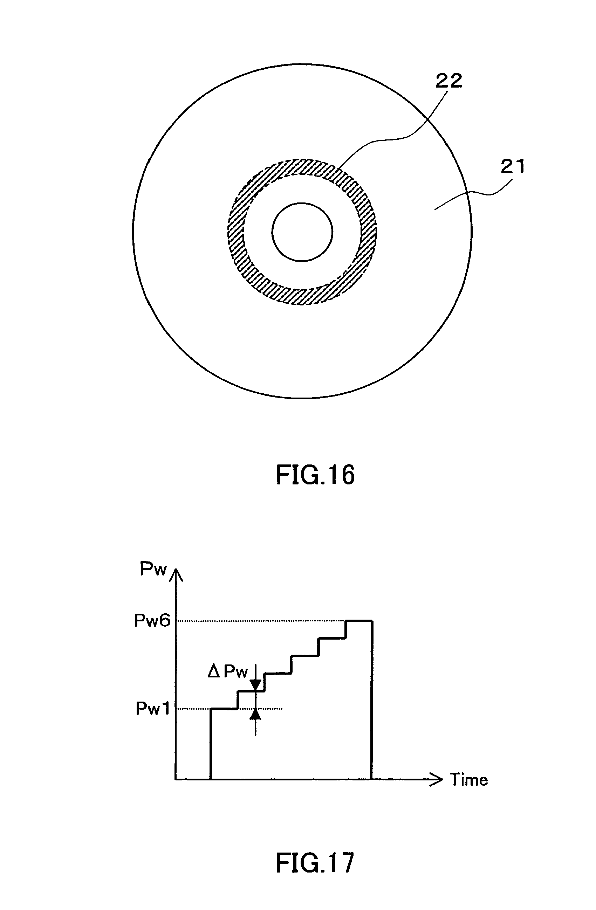

As shown in FIG. 16, the optical disk 1 is provided with, in addition to a data region 21 for recording information, a recording power learning region (PCA: Power Calibration Area) 22 at an inner circumferential portion thereof for learning a recording power as needed prior to information recording.

When the optical information recording/reproducing apparatus learns a recording power, initially, the initial power reading circuit 6 reads a recommended recording power and a target asymmetry value recorded on the optical disk 1. The recommended recording power is a recording power for achieving an optimum recording state in the case of recording under a certain condition. The target asymmetry value is an asymmetry value obtained when the optimum recording state is realized. There is a certain correlation between an asymmetry value and a recording state, and thus the target symmetry value is used as an index when a recording power is learned.

In order to record information actually, it is necessary to learn an optimum recording power in accordance with a state of recording in the recording power learning region 22 since the optimum recording power varies due to a change in light sensitivity of a recording medium caused by a temperature condition in recording, a decrease in laser transmission efficiency caused by dust in the pickup 2 or the like, a positioning error such as displacement of a focal point, a mechanical error such as deviation of a tilt, and the like.

Then, the pickup 2 is moved to the recording power learning region 22 provided at an inner circumferential portion of the optical disk 1, the record pattern generation circuit 5 generates a recording power learning pattern, and the recording power variation circuit 20 varies a recording power in five stages from an initial recording power Pw1 by a recording power increment ΔPw as shown in FIG. 17 based on the recommended recording power read by the initial power reading circuit 6. Then, the recording power learning pattern is recorded using a recording power learning sector as a part of the recording power learning region 22.

In asymmetry detection, a reproduced waveform in accordance with each recording power is reproduced with the pickup 2, and an asymmetry value at each recording power is detected by the asymmetry detection circuit 18.

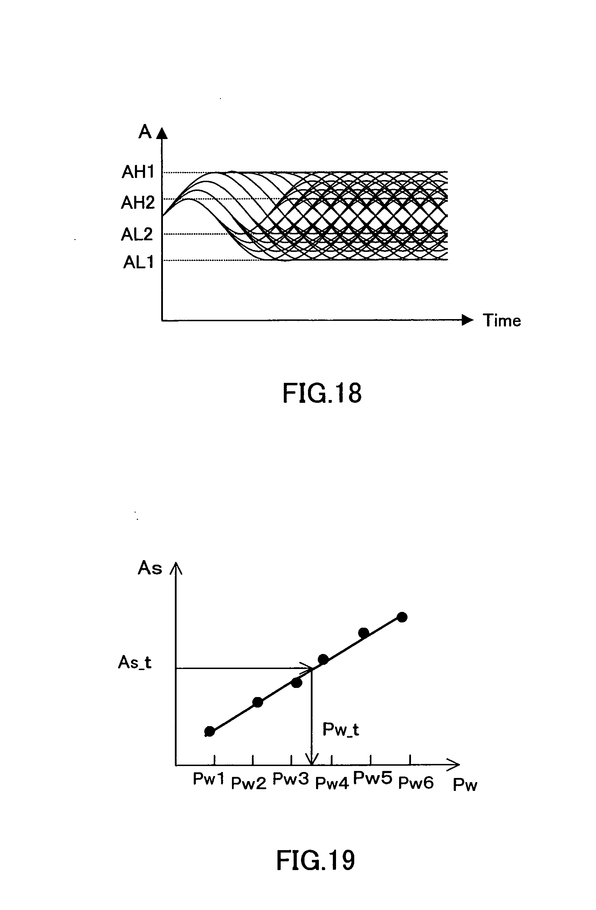

FIG. 18 shows reproduced waveforms obtained when information is recorded at an appropriate recording power. The recording power learning pattern, which is recorded in the same record pattern as in the case of recording information, is composed of record marks (hereinafter, abbreviated simply as marks) and unrecorded spaces (hereinafter, abbreviated simply as spaces) 3T to 11T long on the basis of a recording unit time T.

The asymmetry detection circuit 18 calculates an asymmetry value As using the following Equation (1) from, among amplitude values A of reproduced signals, amplitude values AH1, AH2, AL1, and AL2 of reproduced signals corresponding to the longest space, the shortest space, the longest mark, and the shortest mark, respectively.

$$\mathrm{As} = (((\mathrm{AH2} + \mathrm{AL2})/2) - ((\mathrm{AH1} + \mathrm{AL1})/2))/(\mathrm{AH1} - \mathrm{AL1}) \quad \cdots (1)$$

The asymmetry detection circuit 18 obtains the relationship between each recording power and an asymmetry value shown in FIG. 19 based on the recording powers and the detected asymmetry values.

The target asymmetry recording power determination circuit 19 determines a recording power Pw_t that allows a target asymmetry value As_t to be achieved from the relationship between a recording power and an asymmetry value.

In recording information in the data region 21, the laser output control circuit 4 is operated so as to produce the recording power determined by learning a recording power, whereby information is recorded at an optimum recording power for recording information.

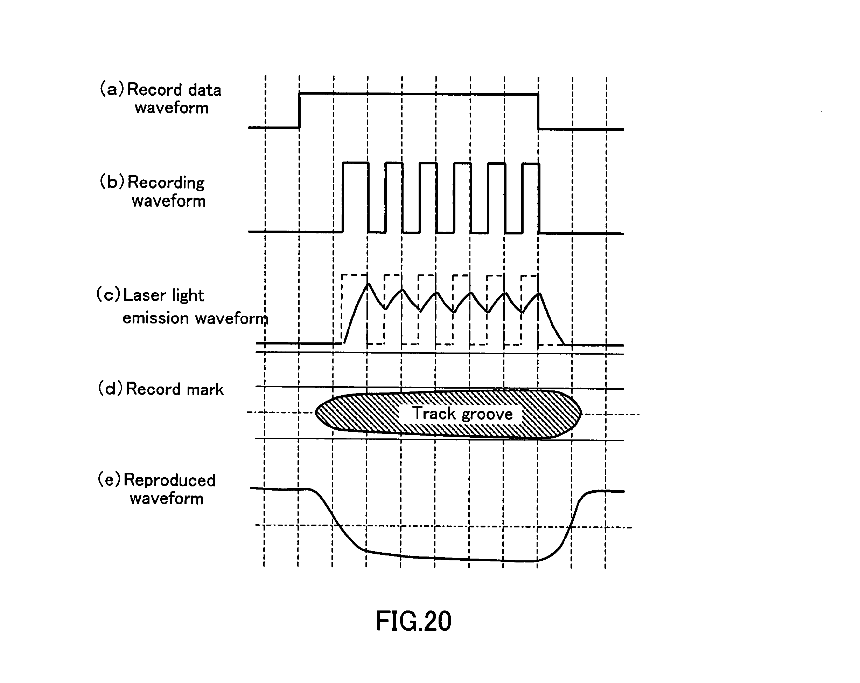

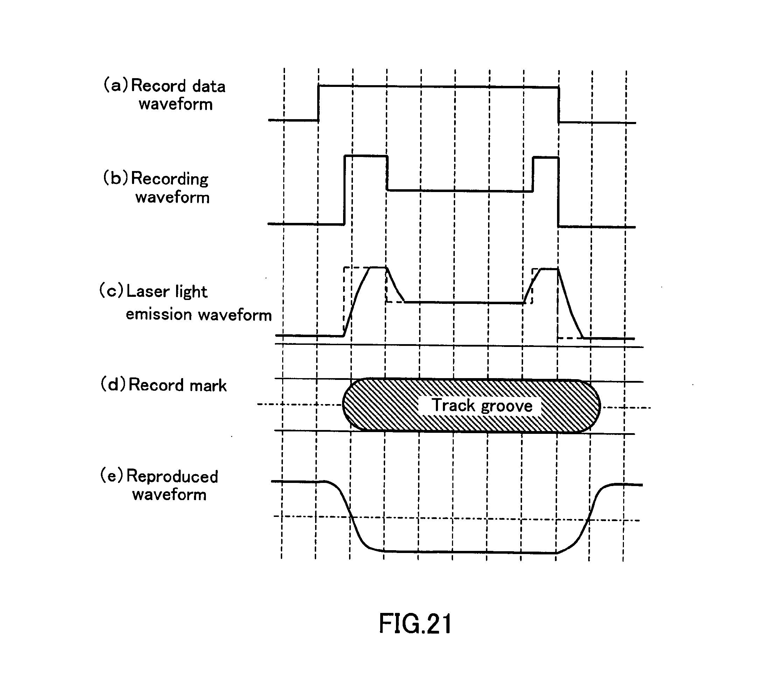

In recent years, recordable-type DVD media commensurate with high-density and high-speed recording have become popular, and accordingly the recording method is shifting from a multipulse method in which a record pattern waveform is composed of a plurality of pulses as shown in FIG. 20 to a non-multipulse method in which a record pattern waveform is composed of a single pulse as shown in FIG. 21.

For example, a record pattern waveform is described in "DVD Specifications for Recordable Disc for General Part1 Optional Specifications 4x-SPEED DVD-R", a written standard of high-speed recording on recordable-type DVD media.

FIG. 20 is a diagram showing a record data waveform, a record pattern waveform (hereinafter abbreviated as a recording waveform), a laser light emission waveform at that time, a shape of a record mark, and a reproduced waveform obtained when high-speed recording is performed using the multipulse method for use in low-speed recording. As is apparent from FIG. 20, laser light is weak due to an insufficient frequency band for laser light emission, and fails to reach a sufficient recording light emission level. As a result, a mark to be recorded is not recorded sufficiently, and a reproduced waveform thereof is deteriorated accordingly.

FIG. 21 is a diagram showing a record data waveform, a recording waveform, a laser light emission waveform, a shape of a record mark, and a reproduced waveform obtained when high-speed recording is performed using the non-multipulse method. As is apparent from FIG. 21, even without a sufficient frequency band for laser light emission, the laser light emission waveform reaches a predetermined light emission value since a pulse for a front-end portion of the recording waveform can be made sufficiently long. In addition, the laser light emission waveform corresponding to a rear-end portion of the recording waveform reaches a predetermined light emission value since it rises from a light emission level corresponding to an intermediate portion of the recording waveform. As a result, a mark to be recorded can be formed into an approximately predetermined mark shape.

A ratio between a recording power light emission value Po corresponding to the front-end portion and the rear-end portion of the recording waveform and a recording power light emission value Pm corresponding to the intermediate portion is recorded on a disk as a disk manufacturer's recommended value. Thus, a recording device takes the recommended value by the initial power reading circuit 6, so that a recording waveform can be formed at a recording power ratio $\varepsilon$ ($\varepsilon$ = Po/Pm).

With respect to such an optical information recording/reproducing apparatus, an actual recording waveform in an actual recording device is deviated from that in a reference device used in a disk manufacturer's evaluation apparatus, and a recording power in the former is reduced from that in the latter, due to characteristics of a pickup such as a beam spot shape and frequency characteristics of a laser light emission waveform, mechanical deviation of a tilt or the like, control deviation of defocusing or the like, etc. For these reasons, a disk manufacturer's recommended value cannot be taken as an optimum recording condition as it is, and it is necessary to find an optimum condition with respect to each recording device.

In particular, in recording using the non-multipulse method, unless the ratio between the recording power light emission value Po corresponding to the front-end portion and the rear-end portion of the recording waveform and the recording power light emission value Pm corresponding to the intermediate portion has an appropriate value, an intermediate portion of a long mark cannot be recorded normally, and accordingly an intermediate portion of the reproduced waveform is distorted. In the worst case, a mark length is detected erroneously, resulting in an error in reproduced data.

Further, when recording is performed on an optical recording medium at a recording power higher than an optimum recording power, in general, recording track grooves are deteriorated, and an amplitude of a tracking error signal, which is information on a relative position between a recording track and a light beam, is reduced. In the worst case, it may become impossible to perform tracking control. Further, when track grooves are deteriorated, a wobble signal as position information and a land prepit as address information formed in the track grooves, for example, cannot be reproduced normally. On this account, it is necessary to detect an upper limit of a recording power so as to prevent recording at the upper limit recording power.

Disclosure of Invention

The present invention has been achieved in view of the above-mentioned problems, and its object is to provide an optical information recording/reproducing apparatus and a method for learning the recording light intensity that allow a recording power to be learned so as to prevent the recording power from being so high as to cause defective tracking control and information detection from track grooves, and to determine an optimum recording condition under which waveform distortion is reduced.

In order to achieve the above-mentioned object, a first embodiment of an optical information recording/reproducing apparatus according to the present invention includes: an optical recording medium (optical disk) for storing information with marks of a plurality of lengths; light irradiation means (pickup) for irradiating the optical recording medium with a light beam so as to form each mark; light driving means (laser driving circuit, laser output control circuit) for allowing the light irradiation means to emit light with desired light intensity; recording waveform control means (record pattern generation circuit) for controlling a recording waveform in accordance with a length of a mark to be recorded; recording output variation means (recording power variation circuit) for instructing the light driving means to perform test recording in a light intensity learning region on the optical recording medium with desired light intensity; modulation degree detection means (modulation degree detection circuit) for detecting a degree of modulation from an amplitude of a reproduced signal of a test-recorded mark; waveform distortion detection means (waveform distortion detection circuit) for detecting waveform distortion of the reproduced signal of the test-recorded mark; first light intensity calculation means (allowable modulation degree power calculation circuit) for calculating recording light intensity (Po_ms) corresponding to an allowable upper limit degree of modulation for the optical recording medium based on the degree of modulation (m) of the reproduced signal of each of the plural marks test-recorded with a plurality of light intensity values in the light intensity learning region (recording power learning region: PCA) and the allowable upper limit degree of modulation (ms); second light intensity calculation means (allowable waveform distortion power calculation circuit) for calculating recording light intensity (Po_ζs) corresponding to an allowable waveform distortion amount for the optical recording medium based on the waveform distortion amount (ζ) of the reproduced signal of each of the plural marks test-recorded with a plurality of light intensity values in the light intensity learning region and the allowable waveform distortion amount (ζs); allowable light intensity range determination means (allowable power range determination circuit) for determining a light intensity range (Po_ζs-Po_ms) for recording information on the optical recording medium based on the recording light intensity corresponding to the allowable upper limit degree of modulation and the recording light intensity corresponding to the allowable waveform distortion amount; and optimum light intensity determination means (optimum recording power determination circuit) for determining optimum recording light intensity within the light intensity range determined by the light intensity range determination means.

In order to achieve the above-mentioned object, a second embodiment of an optical information recording/reproducing apparatus according to the present invention includes: an optical recording medium (optical disk) for storing information with marks of a plurality of lengths; light irradiation means (pickup) for irradiating the optical recording medium with a light beam so as to form each mark; light driving means (laser driving circuit, laser output control circuit) for allowing the light irradiation means to emit light with desired light intensity; recording waveform control means (record pattern generation circuit) for outputting a recording waveform having high first recording light intensity (Po) when a mark to be recorded has a length shorter than a first mark length (e.g., 5T), and outputting a recording waveform having the first recording light intensity for a front-end portion and a rear-end portion of the recording waveform and having second recording light intensity (Pm) not higher than the first recording light intensity for an intermediate portion of the recording waveform when a mark to be recorded has a length not shorter than the first mark length; recording output variation means (intermediate portion recording power variation circuit) for setting the second recording light intensity variably while maintaining the first recording light intensity at a constant value, and instructing the light driving means to perform test recording in a light intensity learning region (recording power learning region: PCA) on the optical recording medium; modulation degree detection means (modulation degree detection circuit) for detecting a degree of modulation from an amplitude of a reproduced signal of a test-recorded mark; waveform distortion detection means (waveform distortion detection circuit) for detecting waveform distortion of a reproduced signal of the test-recorded mark; first light intensity calculation means (allowable modulation degree power calculation circuit) for calculating recording light intensity (Pm_ms) corresponding to an allowable upper limit degree of modulation (ms) for the optical recording medium based on the degree of modulation (m) of the reproduced signal of each of the plural marks test-recorded with the plurality of second recoding light intensity values in the light intensity learning region and the allowable upper limit degree of modulation; second light intensity calculation means for calculating recording light intensity (Pm_ζt) corresponding to a target waveform distortion amount (ζt) for the optical recording medium based on the waveform distortion amount (ζ) of the reproduced signal of each of the plural marks test-recorded with the plurality of second recording light intensity values in the light intensity learning region and the target waveform distortion amount; light intensity ratio determination means (recording power ratio determination circuit) for determining a ratio (Po/Pm_ζt) of the recording light intensity values in the respective portions of the recording waveform for recording information on the optical recording medium based on the recording light intensity corresponding to the allowable upper limit degree of modulation and the recording light intensity corresponding to the target waveform distortion amount; and optimum light intensity determination means (optimum recording power determination circuit) for determining optimum recording light intensity at the recording light intensity ratio determined by the light intensity ratio determination means.

In order to achieve the above-mentioned object, a first embodiment of a method for learning recording light intensity according to the present invention is a method for learning recording light intensity of an optical information recording/reproducing apparatus for recording information by irradiating an optical recording medium (optical disk) having a light intensity learning region (recording power learning region: PCA) with a light beam so as to form marks of a plurality of lengths, wherein a mark of predetermined mark length (e.g., 5T) or longer is formed with the light beam in conformity with a recording waveform in which a front-end portion and a rear-end portion of the recording waveform are set to have high first recording light intensity (Po) and an intermediate portion of the recording waveform is set to have second recording light intensity (Pm) not higher than the first recording light intensity, whereby the mark is formed. The method includes: (a) changing each of the first recording light intensity and the second recording light intensity step by step by a predetermined amount ($\Delta$Po, $\Delta$Pm) while maintaining a ratio (Po/Pm) between the first recording light intensity and the second recording light intensity at a constant value, and recording a light intensity learning pattern composed of a plurality of marks (3T-11T) including an approximately longest mark (e.g., 11T mark) in the light intensity learning region; (b) detecting a degree of modulation of a reproduced signal of each of the plural marks in the recorded light intensity learning pattern; (c) detecting a waveform distortion amount of a reproduced signal of the longest mark in the recorded light intensity learning pattern; (d) obtaining recording light intensity (Po_ms) corresponding to an allowable upper limit degree of modulation (ms) based on the detected degree of modulation (m) and the allowable upper limit degree of modulation; (e) obtaining recording light intensity (Po_$\zeta$s) corresponding to an allowable waveform distortion amount ($\zeta$s) based on the detected waveform distortion amount ($\zeta$) and the allowable waveform distortion amount; (f) comparing the recording light intensity corresponding to the allowable upper limit degree of modulation with the recording light intensity corresponding to the allowable waveform distortion amount; and (g) setting recording light intensity for recording information within a range between an upper limit and a lower limit, the upper limit being the recording light intensity corresponding to the allowable upper limit degree of modulation and the lower limit being the recording light intensity corresponding to the allowable waveform distortion amount, when the recording light intensity corresponding to the allowable upper limit degree of modulation is not lower than the recording light intensity corresponding to the allowable waveform distortion amount.

In order to achieve the above-mentioned object, a second embodiment of a method for learning recording light intensity according to the present invention is a method for learning recording light intensity of an optical information recording/reproducing apparatus for recording information by irradiating an optical recording medium (optical disk) having a light intensity learning region (recording power learning region: PCA) with a light beam so as to form marks of a plurality of lengths, wherein a mark of predetermined mark length (e.g., 5T) or longer is formed with the light beam in conformity with a recording waveform in which a front-end portion and a rear-end portion of the recording waveform are set to have high first recording light intensity (Po) and an intermediate portion of the recording waveform is set to have second recording light intensity (Pm) not higher than the first recording light intensity, whereby the mark is formed. The method includes: (a) changing the second recording light intensity step by step by a predetermined amount ($\Delta$Pm) while maintaining the first recording light intensity at a constant value, and recording a light intensity learning pattern composed of a plurality of marks (3T-11T) including an approximately longest mark (e.g., 11T mark) in the light intensity learning region; (b) detecting a degree of modulation of a reproduced signal of each of the plural marks in the recorded light intensity learning pattern; (c) detecting a waveform distortion amount of a reproduced signal of the approximately longest mark in the recorded light intensity learning pattern; (d) obtaining recording light intensity (Pm_ms) corresponding to an allowable upper limit degree of modulation (ms) based on the detected degree of modulation (m) and the allowable upper limit degree of modulation; (e) obtaining recording light intensity (Pm_$\zeta$t) corresponding to a target waveform distortion amount ($\zeta$t) based on the detected waveform distortion amount ($\zeta$) and the target waveform distortion amount; (f) comparing the recording light intensity corresponding to the allowable upper limit degree of modulation with the recording light intensity corresponding to the target waveform distortion amount; and (g) setting the recording light intensity corresponding to the target waveform distortion amount as the second recording light intensity, and determining a ratio (Po/Pm_$\zeta$t) between the first recording light intensity and the set second recording light intensity as an optimum light intensity ratio when the recording light intensity corresponding to the allowable upper limit degree of modulation is not lower than the recording light intensity corresponding to the target waveform distortion amount.

Brief Description of Drawings

FIG. 1 is a block diagram showing an exemplary configuration of an optical information recording/reproducing apparatus according to Embodiment 1 of the present invention.
FIG. 2 is a flow chart showing a procedure in a method for learning the recording light intensity according to Embodiment 1 of the present invention.
FIG. 3 is a diagram showing a 11T waveform (a) of record data for learning a recording power, a laser driving signal waveform (b), a schematic shape of a 11T record mark (c), and a reproduced waveform (d) of the 11T record mark obtained when recording is performed normally.

FIG. 4 is a diagram showing a 11T waveform (a) of record data for learning a recording power, a laser driving signal waveform (b), a schematic shape of a 11T record mark (c), and a reproduced waveform (d) of the 11T record mark obtained when a recording power ratio Po/Pm is constant and recording powers Po and Pm are both high.

FIG. 5 is a diagram showing a 11T waveform (a) of record data for learning a recording power, a laser driving signal waveform (b), a schematic shape of a 11T record mark (c), and a reproduced waveform (d) of the 11T record mark obtained when a recording power ratio Po/Pm is constant and recording powers Po and Pm are both low.

FIG. 6 is a graph showing the relationship among a degree of modulation m, a waveform distortion amount $\zeta$, an allowable upper limit degree of modulation ms, and an allowable waveform distortion amount $\zeta$s when a recording power ratio Po/Pm is constant and recording powers Po and Pm are changed.

FIG. 7 is a graph prepared relative to FIG. 6 that shows a change in the relationship between a recording power Po and a waveform distortion amount $\zeta$ when an intermediate pulse having the first recording power Po is generated for an intermediate portion of a record pattern.

FIG. 8 is a diagram showing a 11T waveform (a) of record data for learning a recording power, a laser driving signal waveform (b), a schematic shape of a 11T record mark (c), and a reproduced waveform (d) of the 11T record mark obtained when an intermediate pulse having a first recording power Po is generated for an intermediate portion of a record pattern.

FIG. 9 is a block diagram showing an exemplary configuration of an optical information recording/reproducing apparatus according to Embodiment 2 of the present invention.

FIG. 10 is a flow chart showing a procedure in a method for learning the recording light intensity according to Embodiment 2 of the present invention.

FIG. 11 is a diagram showing a 11T waveform (a) of record data for learning a recording power, a laser driving signal waveform (b), a schematic shape of a 11T record mark (c), and a reproduced waveform (d) of the 11T record mark obtained when a recording power ratio Po/Pm is high and a second recording power Pm is low.

FIG. 12 is a diagram showing a 11T waveform (a) of record data for learning a recording power, a laser driving signal waveform (b), a schematic shape of a 11T record mark (c), and a reproduced waveform (d) of the 11T record mark obtained when a recording power ratio Po/Pm is low and a second recording power Pm is high.

FIG. 13 is a graph showing the relationship among a degree of modulation m, a waveform distortion amount $\zeta$, an allowable upper limit degree of modulation ms, and a target waveform distortion amount $\zeta$t when a first recording power Po is maintained at a constant value and a second recording power Pm is changed.

FIG. 14 is a graph prepared relative to FIG. 13 that shows a change in the relationship between a recording power Po and a waveform distortion amount $\zeta$ when an intermediate pulse having a first recording power Po is generated for an intermediate portion of a record pattern.

FIG. 15 is a block diagram showing an exemplary configuration of a conventional optical information recording/reproducing apparatus.

FIG. 16 is a plan view schematically showing a configuration of an optical disk having a recording power learning region.

FIG. 17 is a diagram showing a stepwise change of a recording power when the recording power is learned in a conventional manner.

FIG. 18 is a diagram given for the explanation of an asymmetry value that shows reproduced waveforms obtained when information is recorded at an appropriate recording power.

FIG. 19 is a graph showing the relationship between a recording power Pw and an asymmetry value As of a reproduced signal.

FIG. 20 is a diagram showing a record data waveform, a record pattern waveform, a laser light emission waveform, a shape of a record mark, and a reproduced waveform obtained when high-speed recording is performed using a multipulse method.

FIG. 21 is a diagram showing a record data waveform, a recording waveform, a laser light emission waveform at that time, a shape of a record mark, and a reproduced waveform obtained when high-speed recording is performed using a non-multipulse method.

## Description of the Invention

Hereinafter, preferred embodiments of the present invention will be described with reference to the drawings.

(Embodiment 1)

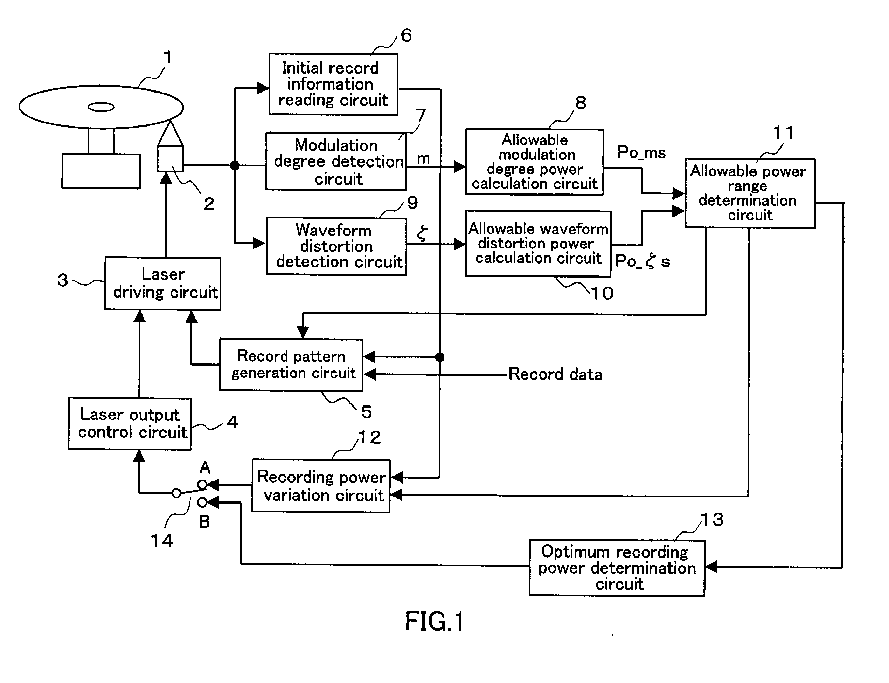

FIG. 1 is a block diagram showing an exemplary configuration of an optical information recording/reproducing apparatus according to Embodiment 1 of the present invention. In FIG. 1, reference numeral 1 denotes an optical disk as an optical recording medium, on which recording track grooves for recording information are formed and at an inner circumferential portion of which a recording power learning region (PCA) 22 as a light intensity learning region is provided as shown in FIG. 16. Reference numeral 2 denotes a pickup as light irradiation means that is equipped with a laser diode for irradiating the optical disk 1 with a light beam. Reference numeral 3 denotes a laser driving circuit for driving the laser diode, and 4 denotes a laser output control circuit for controlling an output of the laser diode using the laser driving circuit 3, the laser driving circuit 3 and the laser output control circuit 4 constituting light driving means.

Reference numeral 5 denotes a record pattern generation circuit as recording waveform control means for controlling a light emission waveform of the laser diode. Reference numeral 6 denotes an initial record information reading circuit for reading out initial record information recorded on the optical disk 1.

Reference numeral 7 denotes a modulation degree detection circuit as modulation degree detection means for detecting a degree of modulation (m) from an amplitude of a reproduced signal. Reference numeral 8 denotes an allowable modulation degree power calculation circuit as first light intensity calculation means for calculating a recording power (Po_ms) corresponding to an allowable upper limit degree of modulation (ms) based on the degree of modulation m detected by the modulation degree detection circuit 7 and the allowable upper limit degree of modulation ms.

Reference numeral 9 denotes a waveform distortion detection circuit as waveform distortion detection means for detecting a waveform distortion amount ($\zeta$) of a reproduced signal of an approximately longest mark (e.g., 11T mark). Reference numeral 10 denotes an allowable waveform distortion power calculation circuit as second light intensity calculation means for calculating a recording power (Po_$\zeta$s) corresponding to an allowable waveform distortion amount ($\zeta$s) based on the waveform distortion amount $\zeta$ detected by the waveform distortion detection circuit 9 and the allowable waveform distortion amount $\zeta$s.

Reference numeral 11 denotes an allowable power range determination circuit as allowable light intensity range determination means for determining a range of a recording power for recording information on the optical disk 1 based on the recording power Po_ms calculated by the allowable modulation degree power calculation circuit 8 and the recording power Po_$\zeta$s calculated by the allowable waveform distortion power calculation circuit 10.

Reference numeral 12 denotes a recording power variation circuit as recording output variation means for instructing the laser output control circuit 4 to set a recording power variably when the recording power is learned in the recording power learning region.

Reference numeral 13 denotes an optimum recording power determination circuit as optimum recording light intensity determination means for determining an optimum recording power for finally recording information based on the recording power range determined by the allowable power range determination circuit 12 and other information.

Reference numeral 14 denotes a transfer switch that switches a contact point to a side A in the case of learning a recording power so that the instruction from the recording power variation circuit 12 is supplied to the laser output control circuit 4, and switches the contact point to a side B in the case of normal information recording so that the instruction from the optimum recording power determination circuit 13 is supplied to the laser output control circuit 4.

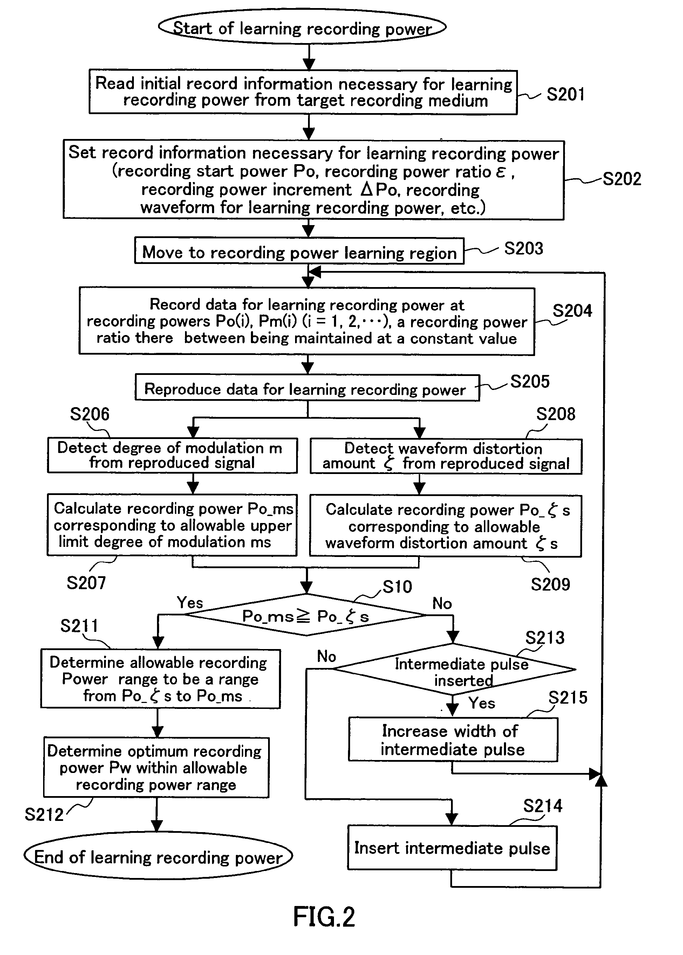

Next, a method for learning a recording power in the optical information recording/reproducing apparatus configured as described above will be described with reference to FIGs. 1 and 2. FIG. 2 is a flow chart showing a procedure in a method for learning the recording light intensity according to the present embodiment.

When the optical information recording/reproducing apparatus learns a recording power, initially, the initial record information reading circuit 6 reads a recommended recording power Poi, a recommended recording power ratio $\epsilon$i, a recommended recording light emission waveform, and the like as initial record information recorded on the optical disk 1 (S201).

Further, based on the read recommended values, the initial record information reading circuit 6 transmits a recording start power Po, a recording power ratio $\epsilon$, a recording power increment $\Delta$Po, and a record pattern waveform for learning a recording power for obtaining an optimum recording power to the record pattern generation circuit 5 and the recording power variation circuit 12 for setting (S202).

Then, the pickup 2 is moved to the recording power learning region 22 (FIG. 16) provided at an inner circumferential portion of the optical disk 1 (S203).

Thereafter, processing in Step S204 is performed in the following manner. Initially, the record pattern generation circuit 5 receives, for example, random 8-16 encoded data as record data for learning a recording power, and in order to record 3T-long to 11T-long (T represents a clock period) as well as 14T-long marks, outputs a record pattern (light intensity learning pattern) for allowing the laser diode to emit light at a high first recording power Po with respect to 3T-long and 4T-long marks and, with respect to marks of 5T long or more, at the high first recording power Po for a front-end portion and a rear-end portion and at a second recording power Pm, which is not higher than the first recording power Po, for an intermediate portion.

Based on the power learning set values from the initial record information reading circuit 6, the recording power variation circuit 12 transmits initial recording powers Po1 and Pm1 of the first recording power Po and the second recording power Pm, respectively, to the laser output control circuit 4 while maintaining the recording power ratio $\epsilon$ between the first recording power Po and the second recording power Pm at a constant value. Further, based on the recording power increments $\Delta$Po and $\Delta$Pm for recording at varied recording powers, the recording power variation circuit 12 obtains subsequent recording powers (Po2, Pm2), (Po3, Pm3) ... (Po(i), Pm(i) (i = 1, 2, 3, ... )), and transmits them to the laser output control circuit 4 through the transfer switch 14.

Based on the instruction from the recording power variation circuit 12, the laser output control circuit 4 instructs the laser driving circuit 3 to allow the laser diode to emit light. Then, the record data for learning a power are recorded in a predetermined area of the recording power learning region at the recording powers Po1 and Pm1. Thereafter, the record data for learning a power are recorded in another area of the recording power learning region at recording powers Po2 and Pm2 obtained by incrementally changing the recording powers by ΔPo and ΔPm, respectively. This operation is repeated for the predetermined number of times, e.g., 6 times, whereby the record data for learning a recording power are recorded. The processing in Step S204 is performed in the above-mentioned manner.

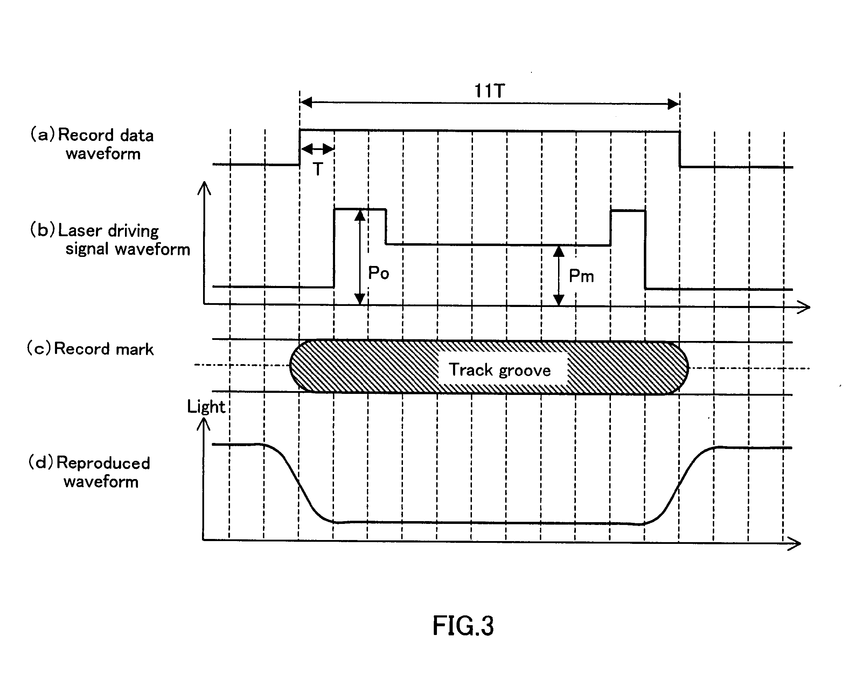

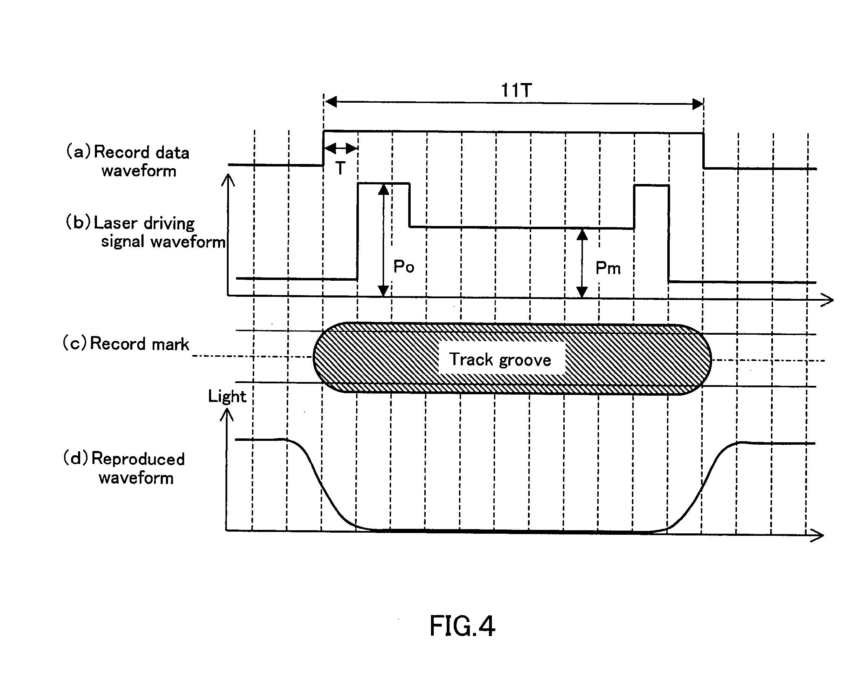

When the record data for learning a recording power are reproduced (S205), the modulation degree detection circuit 7 detects a degree of modulation m of a reproduced signal of a mark recorded at each of the recording powers (S206). Herein, the relationship between a recording power and a degree of modulation will be described with reference to FIGs. 3 and 4.

FIG. 3 is a diagram showing a 11T waveform (a) of the record data for learning a recording power input to the record pattern generation circuit 5, a laser driving signal waveform (b) output from the laser driving circuit 3 upon receipt of the instruction from the record pattern generation circuit 5 and the laser output control circuit 4, a schematic shape of a 11T record mark (c) recorded on the optical disk 1, and a reproduced waveform (d) of the 11T record mark obtained when recording is performed normally. As is apparent from FIG. 3, the degree of modulation of the record mark recorded at an appropriate recording power and recording power ratio is normal, and a track groove is not deteriorated by the record mark.

FIG. 4 shows respective waveforms and a record mark obtained when the recording power ratio Po/Pm is constant and the recording powers Po and Pm are both high. In this case, since the recorded 11T record mark has a large width, the degree of modulation is increased, and the record mark covers a track groove, resulting in distortion in the shape of the track groove.

To avoid this, the allowable modulation degree power calculation circuit 8 calculates a recording power Po_ms corresponding to an allowable upper limit degree of modulation ms based on the degree of modulation of the reproduced signal of the record mark recorded at each of the recording powers Po1 to Po6 and the allowable upper limit degree of modulation ms (S207).

Herein, the allowable upper limit degree of modulation ms is a reference value of a degree of modulation determined based on a degree of modulation in reproduction, which is provided in order to prevent the possibility that the shape of a track groove is distorted as shown in FIG. 4, which, for example, makes it impossible to detect a tracking error signal normally when the record mark is recorded excessively in the optical information recording/reproducing apparatus.

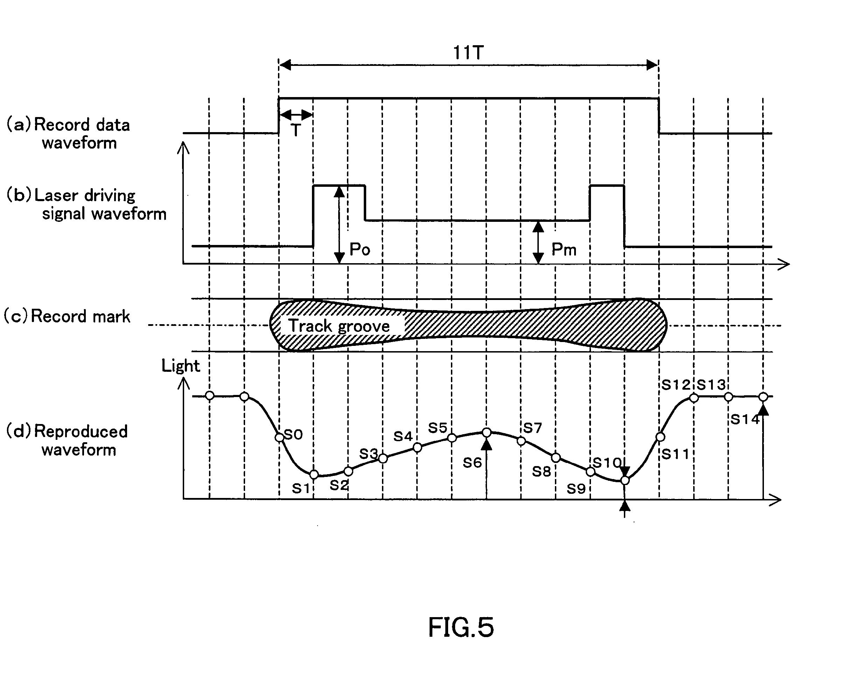

Further, when the record data for learning a power are reproduced (S205), the waveform distortion detection circuit 9 detects a waveform distortion amount ζ of a reproduced signal of a 11T-long mark, for example (S208). Herein, the relationship between a recording power and a waveform distortion amount ζ will be described with reference to FIGs. 3 and 5.

FIG. 3 shows the case where recording is performed normally as mentioned above, in which the record mark recorded at an appropriate recording power and recording power ratio has a constant recorded width and an intermediate portion of the reproduced waveform is flat and not distorted.

FIG. 5 shows the case where the recording power ratio Po/Pm is constant and the recording powers Po and Pm are both low. In this case, the recorded 11T record mark has a smaller recorded width in a front-end portion and a rear-end portion than in an intermediate portion thereof, and an intermediate portion of a reproduced waveform is distorted to a light side.

In the case of, for example, a reproduced waveform of the 11T record mark, the waveform distortion detection circuit 9 calculates a waveform distortion amount ζ based on, among 12 detection values (S0 to S11 in FIG. 5) sampled at a reference reproduction clock, a minimum value (S10), a maximum value (S6) in the intermediate portion, and a detection value (S14) of a non-mark portion. In FIG. 5, the reproduced waveform of the 11T record mark has a minimum value of S10, a maximum value of the intermediate portion of S6, and a detection value of a non-mark portion of S14. Thus, the waveform distortion amount ζ is derived from the equation, $\zeta = (S6 - S10)/(S14 - S10)$.

The allowable waveform distortion power calculation circuit 10 calculates a recording power Po_ζs corresponding to an allowable waveform distortion amount ζs based on a waveform distortion amount at each of the recording powers Po1 to Po6 and the allowable waveform distortion amount ζs (S209).

Herein, the allowable waveform distortion amount ζs is a reference value of a waveform distortion amount determined based on a waveform distortion amount in reproduction, which is provided in order to prevent the possibility that an amplitude in the intermediate portion of the reproduced waveform is reduced as shown in FIG. 5 and in the worst case, the recorded mark cannot be detected as a mark when the record mark is recorded insufficiently in the optical information recording/reproducing apparatus.

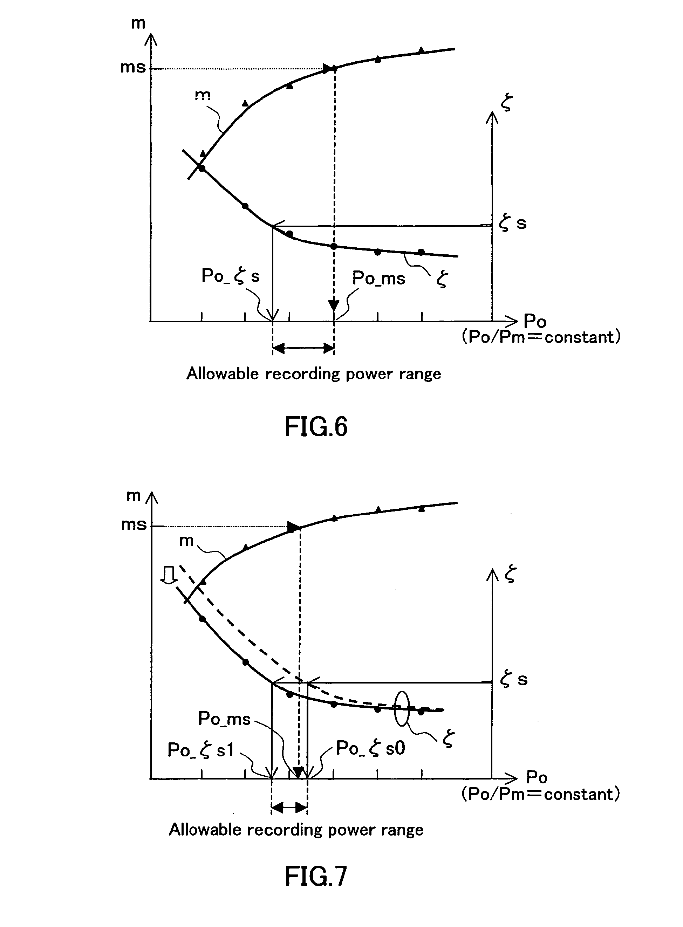

FIG. 6 is a graph showing the relationship among the degree of modulation m, the waveform distortion amount ζ, the allowable upper limit degree of modulation ms, and the allowable waveform distortion amount ζs in the case where the recording power ratio Po/Pm is constant and the recording powers Po and Pm are changed. In FIG. 6, the allowable modulation degree power calculation circuit 8 obtains a recording power Po_ms corresponding to the allowable upper limit degree of modulation ms based on a degree of modulation of a reproduced signal of the record data for learning a recording power recorded at each of the recording powers Po changed from Po1 to Po6 and the allowable upper limit degree of modulation ms, and the allowable waveform distortion power calculation circuit 10 obtains an allowable waveform distortion recording power Po_ζs based on a waveform distortion amount at each of the recording powers and the allowable waveform distortion amount ζs.

An allowable range of a degree of modulation is a range not more than the allowable upper limit degree of modulation ms, and an allowable range of waveform distortion is a range not more than the allowable waveform distortion amount ζs (Yes in a decision in S210 in FIG. 2). Thus, the allowable power range determination circuit 11 determines an allowable recording power range to be a range not lower than the recording power Po_ζs corresponding to the allowable waveform distortion amount ζs and not higher than the recording power Po_ms corresponding to the allowable upper limit degree of modulation ms (S211). A lower limit degree of modulation, a description of which is omitted in the present specification, is specified in a written standard or the like. When a recording power corresponding to the lower limit degree of modulation is higher than the recording power Po_ζs corresponding to the allowable waveform distortion amount ζs, a lower limit of the allowable recording power range is determined to be the recording power corresponding to the lower limit degree of modulation.

Based on the allowable recording power range determined by the allowable power range determination circuit 11, the optimum recording power determination circuit 13 determines an optimum recording power Pw for recording information (S212). The optimum recording power Pw is determined by selecting, for example, a recording power having the lowest jitter value from the recording powers in the allowable recording power range.

The optimum recording power Pw determined by the optimum recording power determination circuit 13 is transmitted to the laser output control circuit 4 as a recording power for recording information in the data region 21 (FIG. 16), and information is recorded.

In some optical information recording/reproducing apparatuses, there is a case where the allowable recording power range cannot be obtained due to a difference in characteristics between the optical disk 1 and the pickup 2.

FIG. 7 is a graph showing the relationship among the degree of modulation m, the waveform distortion amount ζ (broken line), the allowable upper limit degree of modulation ms, and the allowable waveform distortion amount ζs in the case where the recording power ratio Po/Pm is constant and the recording powers Po and Pm are changed as in FIG. 6. As is apparent from FIG. 7, the recording power Po_ms corresponding to the allowable upper limit degree of modulation ms is lower than a recording power Po_ζs0 corresponding to the allowable waveform distortion amount ζs (No in the decision in S210 in FIG. 2), which makes it impossible to determine the allowable recording power range.

In such a case, the allowable power range determination circuit 11 instructs the record pattern generation circuit 5 to output a waveform (intermediate pulse) having the first recording power for a part of an intermediate portion with respect to, for example, marks of 9T long or more (S214 branched in the case of No in a decision in S213).

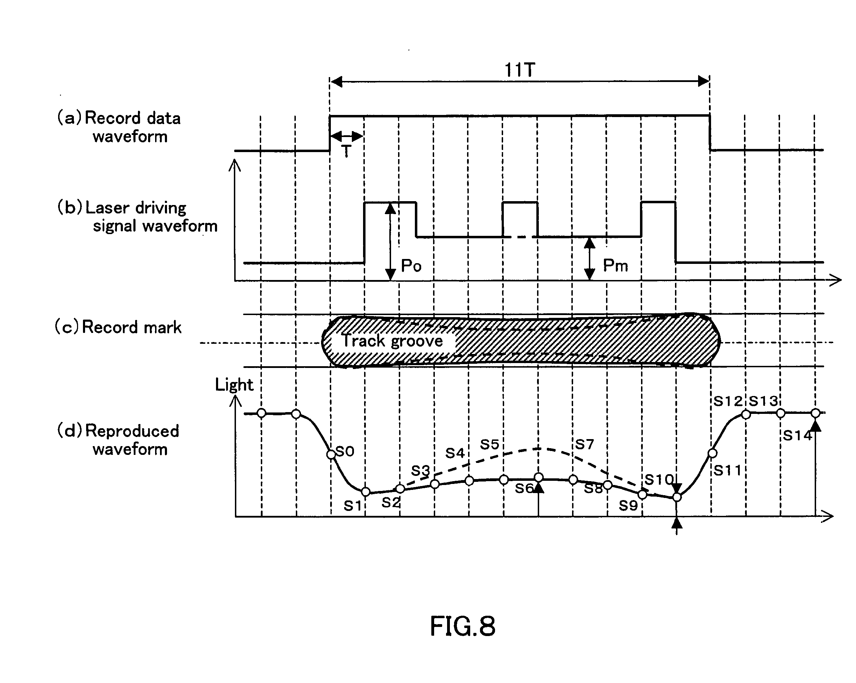

FIG. 8 is a schematic diagram showing a record data waveform (a), a laser driving signal (b), a shape of a recorded 11T record mark (c), and a reproduced waveform (d) of the 11T record mark obtained when an intermediate pulse having the first recording power Po is output for a part of an intermediate portion of a 11T record pattern. In FIG. 8, by generating an intermediate pulse having the first recording power Po for a part of the intermediate portion of the record pattern, the intermediate portion of the record mark has a larger width, and distortion of the waveform of a reproduced signal is reduced as compared with that in FIG. 5.

By generating an intermediate pulse having the first recording power Po for a part of the intermediate portion of the record mark, in FIG. 7, waveform distortion amounts obtained at the same Po, Pm values are reduced (solid line), and accordingly a lower recording power Po_ζs1 corresponding to the allowable waveform distortion amount ζs is reduced, which makes it possible to determine the allowable recording power range.

Further, by increasing a width of the intermediate pulse having the first recording power generated for a part of the intermediate portion of the record mark (S215 branched in the case of Yes in the decision in S213 in FIG. 2), waveform distortion can be reduced gradually. Thus, if it is still impossible to determine the allowable recording power range even after an intermediate pulse is generated once, a width of the intermediate pulse is increased and a recording power is learned again (the process returns to S204), whereby the allowable recording power range can be obtained.

There is also a case where the situation as shown by the broken line in FIG. 7 is unlikely to occur. In such a case, the configuration for inserting an intermediate pulse (Steps S213 to S215) is not necessary. This is because there is no practical problem even if an intermediate pulse cannot be inserted. Even in the case where the configuration for inserting an intermediate pulse is provided, the configuration for varying a pulse width (Step S215) may be omitted practically.

Further, instead of outputting an intermediate pulse having the first recording power Po for a part of the intermediate portion of the record mark as described above, it is also possible to change the recording power ratio Po/Pm and increase the second recording power Pm so as to solve the problem that the allowable recording power range cannot be determined as shown by the broken line in FIG. 7. In view of other conditions, such a method may be adopted.

In the above description, the circuitry including the allowable modulation degree power calculation circuit, the waveform distortion power calculation circuit, the allowable power range determination circuit, the optimum recording power determination circuit, and the like is provided. However, the same effect also can be achieved by realizing the same operations as those of the above by an arithmetic operation of a microcomputer, for example.

(Embodiment 2)

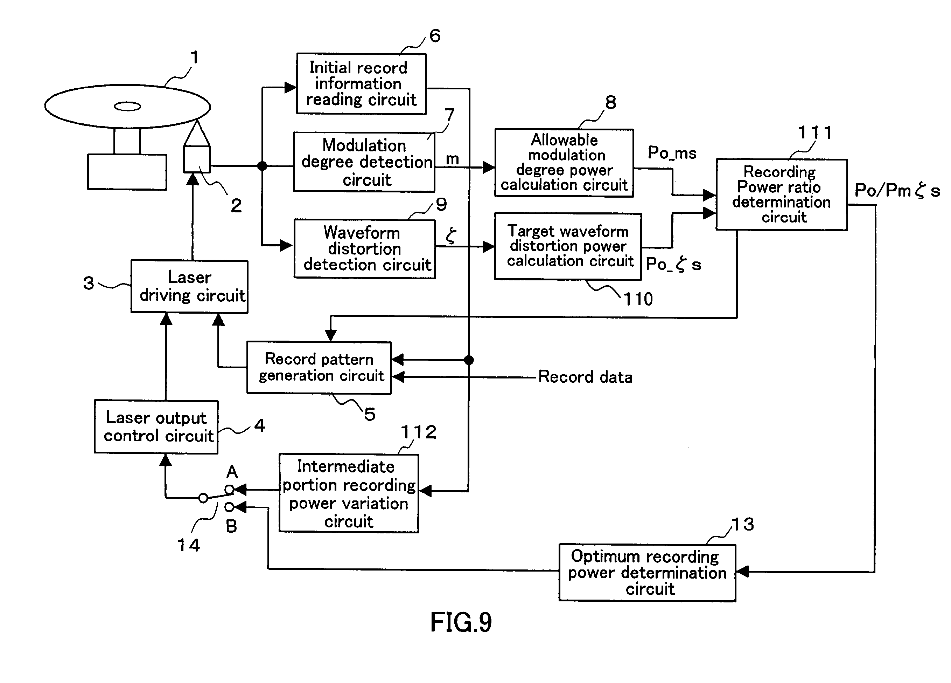

FIG. 9 is a block diagram showing an exemplary configuration of an optical information recording/reproducing apparatus according to Embodiment 2 of the present invention. In FIG. 9, the same components as those shown in FIG. 1 referred to in Embodiment 1 are denoted with the same reference numerals, and descriptions thereof will be omitted. Hereinafter, differences from Embodiment 1 will be described mainly.

In FIG. 9, reference numeral 110 denotes a target waveform distortion power ratio calculation circuit as second light intensity calculation means for calculating a recording power Pm_ζt corresponding to a target waveform distortion amount ζt based on the waveform distortion ζ of a reproduced signal detected by the waveform distortion detection circuit 9 and the target waveform distortion amount ζt.

Reference numeral 111 denotes a recording power ratio determination circuit as light intensity ratio determination means for determining a recording power ratio Po/Pmζ based on the recording power Pm_ms corresponding to the allowable upper limit degree of modulation ms calculated by the allowable modulation degree power calculation circuit 8 and the recording power Pm_ζt corresponding to the target waveform distortion amount ζt.

Reference numeral 112 denotes an intermediate portion recording power variation circuit as recording output variation means for instructing, when a recording power is learned in the recording power learning region, the laser output control circuit 4 to irradiate a laser beam at a high first recording power Po for a front-end portion and a rear-end portion of a recording waveform and at a second recording power Pm not higher than the first recording power for an intermediate portion, and to set the recording power Pm for the intermediate portion to be varied step by step in the formation of a mark of a predetermined length or longer.

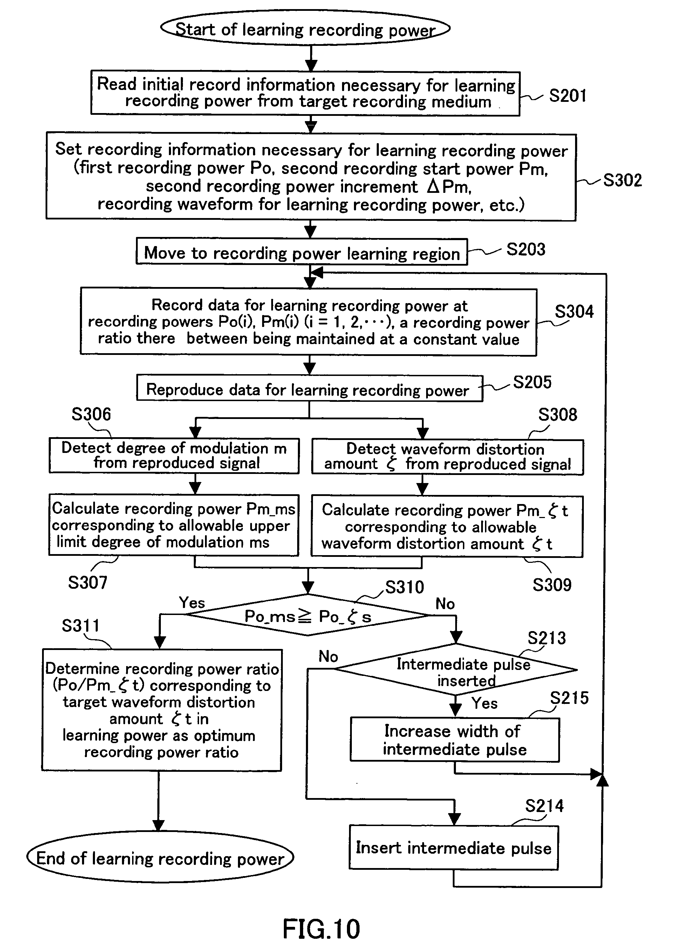

Next, a method for learning a recording power in the optical information recording/reproducing apparatus configured as described above will be described with reference to FIGs. 9 and 10. FIG. 10 is a flow chart showing a procedure in a method for learning the recording light intensity according to the present embodiment.

When the optical information recording/reproducing apparatus learns a recording power, as in Embodiment 1, initially, the initial record information reading circuit 6 reads a recommended recording power Poi, a recommended recording power ratio εi, a recommended recording light emission waveform, and the like as initial record information recorded on the optical disk 1 (S201).

Further, based on the read recommended values, the initial record information reading circuit 6 transmits a first recording power Po, a second recording power Pm, a second recording power increment ΔPm, and a record pattern waveform for learning a recording power for obtaining an optimum recording power to the record pattern generation circuit 5 and the intermediate portion recording power variation circuit 112 for setting (S302).

Then, the pickup 2 is moved to the recording power learning region 22 (FIG. 16) provided at an inner circumferential portion of the optical disk 1 (S203).

Thereafter, processing in Step S304 is performed in the following manner. Initially, the record pattern generation circuit 5 receives, for example, random 8-16 encoded data as record data for learning a recording power, and in order to record 3T-long to 11T-long as well as 14T-long marks, outputs a record pattern for learning a recording power for allowing the laser diode to emit light at a high first recording power Po with respect to 3T-long and 4T-long marks and with respect to marks of 5T long or more, at the high first recording power Po for a front-end portion and a rear-end portion and at a second recording power Pm not higher than the first recording power Po for an intermediate portion.

Based on the instruction from the initial record information reading circuit 6, the intermediate portion recording power variation circuit 112 obtains second recording powers Pm2, Pm3, ... Pm(i) (i = 1, 2, 3, ...) for recording at a second recording power Pm varied from its initial recording power Pm1 and at a varied recording power ratio (Po/Pm), while maintaining the first recording power Po at a constant value, and transmits them to the laser output control circuit 4.

Based on the instruction from the intermediate portion recording power variation circuit 122, the laser output control circuit 4 instructs the laser driving circuit 3 to emit light at the first recording power Po with high light intensity for the front-end portion and the rear-end portion of the record pattern and at the second recording power Pm for the intermediate portion. Then, the record data for learning a power are recorded in a predetermined area of the recording power learning region at the first recording power Po and the second recording power Pm1. Thereafter, the record data for learning a power are recorded in another part of the recording power learning region at the first recording power Po and a recording power Pm2 obtained by incrementally changing the second recording power Pm1 by ΔPm. This operation is repeated for the predetermined number of times, e.g., 6 times, whereby the record data for learning a recording power are recorded. The processing in Step S304 is performed in the above-mentioned manner.

When the record data for learning a power are reproduced (S205), as in Embodiment 1, the modulation degree detection circuit 7 detects a degree of modulation m of a reproduced signal of a mark recorded at the first recording power Po and each of the plurality of second recording powers Pm1 to Pm6 (S306). Based on the degree of modulation of a reproduced signal of a record mark recorded at each of the plurality of second recording powers Pm1 to Pm6 and an allowable upper limit degree of modulation ms, the allowable modulation degree power calculation circuit 8 calculates a recording power Pm_ms corresponding to the allowable upper limit degree of modulation ms (S307).

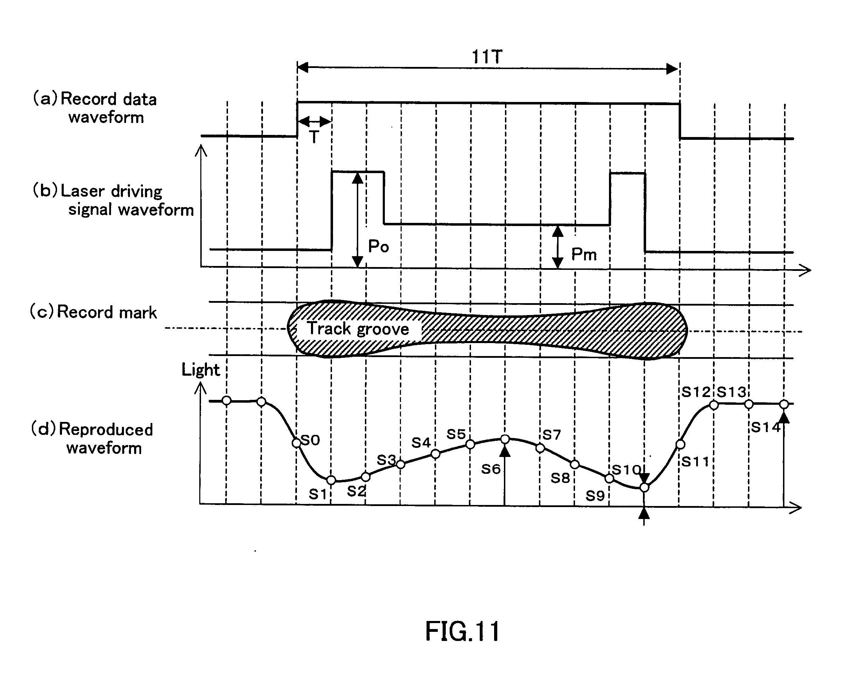

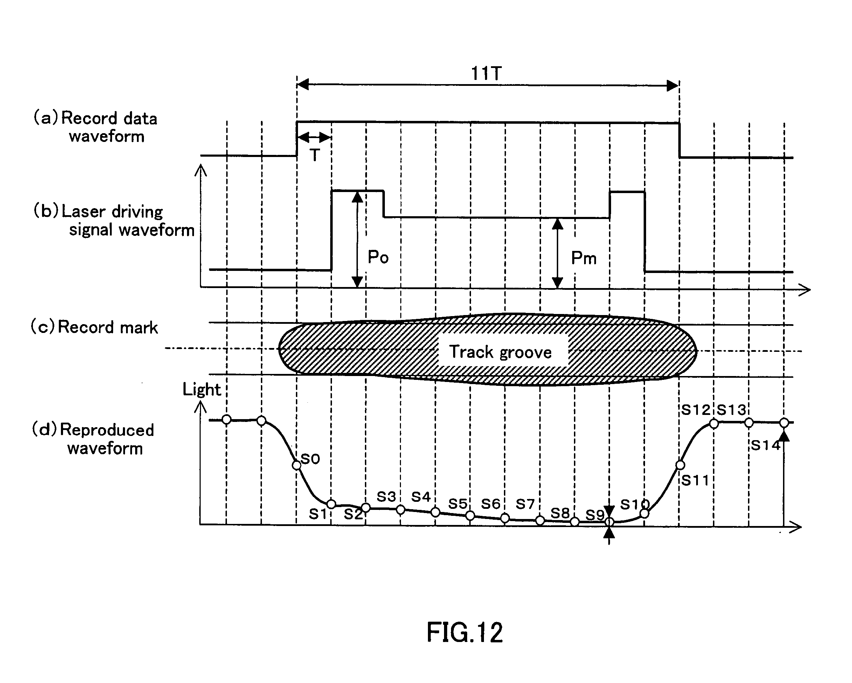

Further, when the record data for learning a power are reproduced (S205), the waveform distortion detection circuit 9 detects a waveform distortion amount ζ of a reproduced signal of a 11T-long mark, for example (S308). Herein, the relationship between a recording power ratio and waveform distortion will be described with reference to FIGs. 11 and 12.

FIG. 11 shows respective waveforms and a record mark obtained when the recording power ratio Po/Pm is high and the second recording power Pm is low. In this case, the recorded 11T record mark has a smaller recorded width in an intermediate portion than in a front-end portion and a rear-end portion thereof, and an intermediate portion of a reproduced waveform is distorted to a light side.

FIG. 12 shows respective waveforms and a record mark obtained when the recording power ratio Po/Pm is low and the second recording power Pm is high. In this case, the recorded 11T record mark has a larger recorded width in an intermediate portion than in a front-end portion and a rear-end portion thereof, and an intermediate portion of a reproduced waveform is distorted to a dark side.

To avoid these, the target waveform distortion power ratio calculation circuit 110 calculates a recording power Pm_ζt corresponding to a target waveform distortion amount ζt based on the waveform distortion amount of the reproduced signal of the 11T mark recorded at each of the second recording powers Pm1 to Pm6 and the target waveform distortion amount ζt (S309 in FIG. 10).

Herein, the target waveform distortion amount ζt is a reference value of a waveform distortion amount determined based on an appropriate waveform distortion amount in reproduction, which is provided in order to prevent the possibility that the recorded mark cannot be detected as a mark in the case where an amplitude in the intermediate portion of the reproduced waveform is reduced and that the record mark covers a track groove, which results in distortion in the shape of the track groove in the case where an amplitude in the intermediate portion of the reproduced waveform is increased excessively as shown in FIGs. 11 and 12, respectively, when the record mark is recorded excessively or insufficiently in the optical information recording/reproducing apparatus.

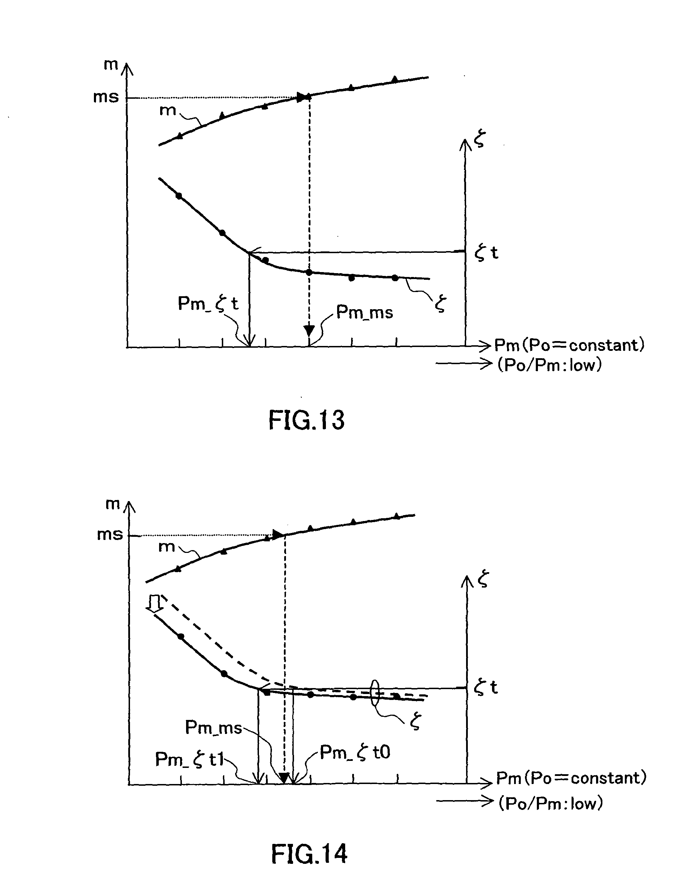

FIG. 13 is a graph showing the relationship among the degree of modulation m, the waveform distortion amount ζ, the allowable upper limit degree of modulation ms, and the target waveform distortion amount ζt in the case where the first recording power Po is maintained at a constant value and the second recording power Pm is changed. The allowable modulation degree power calculation circuit 8 obtains a recording power Pm_ms corresponding to the allowable upper limit degree of modulation based on a degree of modulation of a reproduced signal of the record data for learning a recording power recorded at each of the recording powers Pm changed from Pm1 to Pm6 and the allowable upper limit degree of modulation ms, and the target waveform distortion power calculation circuit 110 obtains a recording power Pm_ζt corresponding to the target waveform distortion amount ζt based on a waveform distortion amount at each of the recording powers and the target waveform distortion amount ζt.

When the recording power Pm_ζt corresponding to the target waveform distortion amount ζt is within a range not more than the recording power Pm_ms corresponding to the allowable upper limit degree of modulation ms (Yes in a decision in S310 in FIG. 10), the recording power ratio determination circuit 111 determines a ratio ε_ζt (= Po/Pm_ζt) between the first recording power Po and the recording power Pm_ζt corresponding to the target waveform distortion ζt as an optimum recording power ratio (S311).

Based on the optimum recording power ratio determined by the recording power ratio determination circuit 111, the optimum recording power determination circuit 13 determines an optimum recording power Pw for recording information. The optimum recording power Pw is determined by selecting, for example, a recording power having a desired asymmetry value using the optimum recording power ratio ε_ζt.

The optimum recording power Pw determined by the optimum recording power determination circuit 13 is transmitted to the laser output control circuit 4 as a recording power for recording information in the data region, and information is recorded.

In some optical information recording/reproducing apparatuses, there is a case where the optimum recording power ratio cannot be obtained due to a difference in characteristics between the optical disk 1 and the pickup 2.

FIG. 14 is a graph showing the relationship among the degree of modulation m, the waveform distortion amount ζ (broken line), the allowable upper limit degree of modulation ms, and the target waveform distortion amount ζt in the case where the first recording power Po is maintained at a constant value and the second recording power Pm is changed as in FIG. 13. As is apparent from FIG. 14, the recording power Pm_ms corresponding to the allowable upper limit degree of modulation ms is lower than a recording power Pm_ζt0 corresponding to the target waveform distortion amount ζs (No in the decision in S310 in FIG. 10), which makes it impossible to determine the optimum recording power ratio ε_ζt.

In such a case, the recording power ratio determination circuit 16 instructs the record pattern generation circuit 5 to output a waveform (intermediate pulse) having the first recording power Po for a part of an intermediate portion with respect to, for example, marks of 9T long or more (S214 branched in the case of No in a decision in S213 in FIG. 10).

By generating an intermediate pulse having the first recording power Po for a part of the intermediate portion of the record mark, in FIG. 14, waveform distortion amounts obtained at the same Pm values are reduced (full line), and accordingly a lower recording power Pm_ζt corresponding to the target waveform distortion amount ζt is reduced, which makes it possible to determine the optimum recording power ratio ε_ζt.

Further, by increasing a width of the intermediate pulse having the first recording power Po generated for a part of the intermediate portion of the record mark (S215 branched in the case of Yes in the decision in S213 in FIG. 10), waveform distortion can be reduced gradually. Thus, if it is still impossible to determine the optimum recording power ratio ε_ζt even after an intermediate pulse is generated once, a width of the intermediate pulse is increased and a recording power is learned again (the process returns to S304 in FIG. 10), whereby the optimum recording power ratio ε_ζt can be obtained.

There is also a case where the situation as shown by the broken line in FIG. 14 is unlikely to occur. In such a case, the configuration for inserting an intermediate pulse (Steps S213 to S215) is not necessary. This is because there is no practical problem even if an intermediate pulse cannot be inserted. Even in the case where the configuration for inserting an intermediate pulse is provided, the configuration for varying a pulse width (Step S215) may be omitted practically.

In the above description, the circuitry including the allowable modulation degree power calculation circuit, the target waveform distortion power calculation circuit, the optimum power ratio determination circuit, the optimum recording power determination circuit, and the like is provided. However, the same effect can be achieved by realizing the same operations as those of the above by an arithmetic operation of a microcomputer, for example.

Industrial Applicability

According to the present invention, it is possible to prevent track grooves from being deteriorated due to an excessively high recording power and waveform distortion from being created, and a recording power for recording information can be optimized.

Further, it is possible to determine a recording power ratio corresponding to a target waveform distortion amount within a range that causes no deterioration of track grooves due to an excessively high recording power, and thus a recording power for recording information can be optimized.

**Claims**

1. An optical information recording/reproducing apparatus, comprising:

   an optical recording medium for storing information with marks of a plurality of lengths;
   light irradiation means for irradiating the optical recording medium with a light beam so as to form each mark;
   light driving means for allowing the light irradiation means to emit light with desired light intensity;
   recording waveform control means for controlling a recording waveform in accordance with a length of a mark to be recorded;
   recording output variation means for instructing the light driving means to perform test recording in a light intensity learning region on the optical recording medium with desired light intensity;
   modulation degree detection means for detecting a degree of modulation from an amplitude of a reproduced signal of a test-recorded mark;
   waveform distortion detection means for detecting waveform distortion of the reproduced signal of the test-recorded mark;
   first light intensity calculation means for calculating recording light intensity corresponding to an allowable upper limit degree of modulation for the optical recording medium based on the degree of modulation of the reproduced signal of each of the plural marks test-recorded with a plurality of light intensity values in the light intensity learning region and the allowable upper limit degree of modulation;
   second light intensity calculation means for calculating recording light intensity corresponding to an allowable waveform distortion amount for the optical recording medium based on the waveform distortion amount of the reproduced signal of each of the plural marks test-recorded with a plurality of light intensity values in the light intensity learning region and the allowable waveform distortion amount;

allowable light intensity range determination means for determining a light intensity range for recording information on the optical recording medium based on the recording light intensity corresponding to the allowable upper limit degree of modulation and the recording light intensity corresponding to the allowable waveform distortion amount; and

optimum light intensity determination means for determining optimum recording light intensity within the light intensity range determined by the light intensity range determination means.

2. The optical information recording/reproducing apparatus according to claim 1, wherein the recording waveform control means outputs a recording waveform having high first recording light intensity for recording a mark whose length is shorter than a first mark length, and outputs a recording waveform having the first recording light intensity for a front-end portion and a rear-end portion of the recording waveform and having second recording light intensity not higher than the first recording light intensity for an intermediate portion of the recording waveform for recording a mark whose length is not shorter than the first mark length.

3. The optical information recording/reproducing apparatus according to claim 2, wherein the recording output variation means sets the first recording light intensity and the second recording light intensity variably while maintaining a ratio between the first recording light intensity and the second recording light intensity at a constant value.

4. The optical information recording/reproducing apparatus according to claim 3,
   wherein the allowable light intensity range determination means compares the recording light intensity corresponding to the allowable upper limit degree of modulation with the recording light intensity corresponding to the allowable waveform distortion amount, and
   the allowable light intensity range determination means determines the recording light intensity range such that the recording light intensity corresponding to the allowable upper limit degree of modulation is an upper limit and the recording light intensity corresponding to the allowable waveform distortion amount is a lower limit when the recording light intensity corresponding to the allowable upper limit degree of modulation is not lower than the recording light intensity corresponding to the allowable waveform distortion amount, while
   the allowable light intensity range determination means instructs the recording waveform control means to output a recording waveform having the first light intensity for a part of an intermediate portion of the recording waveform for a mark whose length is not shorter than a second mark length that is longer than the first mark length when the recording light intensity corresponding to the allowable upper limit degree of modulation is lower than the recording light intensity corresponding to the allowable waveform distortion amount.

5. The optical information recording/reproducing apparatus according to claim 3,
   wherein the allowable light intensity range determination means compares the recording light intensity corresponding to the allowable upper limit degree of modulation with the recording light intensity corresponding to the allowable waveform distortion amount, and
   the allowable light intensity range determination means determines the recording light intensity range such that the recording light intensity corresponding to the allowable upper limit degree of modulation is an upper limit and the recording light intensity corresponding to the allowable waveform distortion amount is a lower limit when the recording light intensity corresponding to the allowable upper limit degree of modulation is not lower than the recording light intensity corresponding to the allowable waveform distortion amount, while
   the allowable light intensity range determination means instructs the recording output variation means to change the ratio between the first recording light intensity and the second recording light intensity so as to increase the second recording light intensity when the recording light intensity corresponding to the allowable upper limit degree of modulation is lower than the recording light intensity corresponding to the allowable waveform distortion amount.

6. An optical information recording/reproducing apparatus, comprising:

   an optical recording medium for storing information with marks of a plurality of lengths;
   light irradiation means for irradiating the optical recording medium with a light beam so as to form each mark;
   light driving means for allowing the light irradiation means to emit light with desired light intensity;
   recording waveform control means for outputting a recording waveform having high first recording light intensity when a mark to be recorded has a length shorter than a first mark length, and outputting a recording waveform having the first recording light intensity for a front-end portion and a rear-end portion of the recording waveform and having second recording light intensity not higher than the first recording light intensity for an intermediate portion of the recording waveform when a mark to be recorded has a length not shorter than the first mark length;
   recording output variation means for setting the second recording light intensity variably while maintaining the first recording light intensity at a constant value, and instructing the light driving means to perform test recording in a light intensity learning region on the optical recording medium;

modulation degree detection means for detecting a degree of modulation from an amplitude of a reproduced signal of a test-recorded mark;

waveform distortion detection means for detecting waveform distortion of a reproduced signal of the test-recorded mark;

first light intensity calculation means for calculating recording light intensity corresponding to an allowable upper limit degree of modulation for the optical recording medium based on the degree of modulation of the reproduced signal of each of the plural marks test-recorded with the plurality of second recoding light intensity values in the light intensity learning region and the allowable upper limit degree of modulation;

second light intensity calculation means for calculating recording light intensity corresponding to a target waveform distortion amount for the optical recording medium based on the waveform distortion amount of the reproduced signal of each of the plural marks test-recorded with the plurality of second recording light intensity values in the light intensity learning region and the target waveform distortion amount;

light intensity ratio determination means for determining a ratio of the recording light intensity values in the respective portions of the recording waveform for recording information on the optical recording medium based on the recording light intensity corresponding to the allowable upper limit degree of modulation and the recording light intensity corresponding to the target waveform distortion amount; and

optimum light intensity determination means for determining optimum recording light intensity at the recording light intensity ratio determined by the light intensity ratio determination means.

7. The optical information recording/reproducing apparatus according to claim 6,
wherein the light intensity ratio determination means compares the recording light intensity corresponding to the allowable upper limit degree of modulation with the recording light intensity corresponding to the target waveform distortion amount, and

the light intensity ratio determination means determines the ratio of the recording light intensity values using the recording light intensity corresponding to the target waveform distortion amount when the recording light intensity corresponding to the allowable upper limit degree of modulation is not lower than the recording light intensity corresponding to the target waveform distortion amount, while

the light intensity ratio determination means instructs the recording waveform control means to output a recording waveform having the first recording light intensity for a part of an intermediate portion of the recording waveform for a mark whose length is not shorter than a second mark length that is longer than the first mark length when the recording light intensity corresponding to the allowable upper limit degree of modulation is lower than the recording light intensity corresponding to the target waveform distortion amount.

8. A method for learning recording light intensity of an optical information recording/reproducing apparatus for recording information by irradiating an optical recording medium having a light intensity learning region with a light beam so as to form marks of a plurality of lengths, wherein a mark of predetermined mark length or longer is formed with the light beam in conformity with a recording waveform in which a front-end portion and a rear-end portion of the recording waveform are set to have high first recording light intensity and an intermediate portion of the recording waveform is set to have second recording light intensity not higher than the first recording light intensity, whereby the mark is formed, the method comprising:

(a) changing each of the first recording light intensity and the second recording light intensity step by step by a predetermined amount while maintaining a ratio between the first recording light intensity and the second recording light intensity at a constant value, and recording a light intensity learning pattern composed of a plurality of marks including an approximately longest mark in the light intensity learning region;

(b) detecting a degree of modulation of a reproduced signal of each of the plural marks in the recorded light intensity learning pattern;

(c) detecting a waveform distortion amount of a reproduced signal of the approximately longest mark in the recorded light intensity learning pattern;

(d) obtaining recording light intensity corresponding to an allowable upper limit degree of modulation based on the detected degree of modulation and the allowable upper limit degree of modulation;

(e) obtaining recording light intensity corresponding to an allowable distortion amount based on the detected waveform distortion amount and the allowable waveform distortion amount;

(f) comparing the recording light intensity corresponding to the allowable upper limit degree of modulation with the recording light intensity corresponding to the allowable waveform distortion amount; and

(g) setting recording light intensity for recording information within a range between an upper limit and a lower limit, the upper limit being the recording light intensity corresponding to the allowable upper limit degree of modulation and the lower limit being the recording light intensity corresponding to the allowable waveform distortion amount, when the recording light intensity corresponding to the allowable upper limit degree of modulation is not lower than the recording light intensity corresponding to the allowable waveform distortion amount.

9. The method for learning recording light intensity according to claim 8, further comprising (h) setting a part of the intermediate portion of the recording waveform to have the first recording light intensity when the recording light intensity corresponding to the allowable upper limit degree of modulation is lower than the recording light intensity corresponding to the allowable waveform distortion amount and the intermediate portion is set to have the second recording light intensity.

10. The method for learning recording light intensity according to claim 9, further comprising (i) extending a time period of the part of the intermediate portion of the recording waveform when the recording light intensity corresponding to the allowable upper limit degree of modulation is lower than the recording light intensity corresponding to the allowable waveform distortion amount and the part of the intermediate portion is set to have the first recording light intensity.

11. A method for learning recording light intensity of an optical information recording/reproducing apparatus for recording information by irradiating an optical recording medium having a light intensity learning region with a light beam so as to form marks of a plurality of lengths, wherein a mark of predetermined mark length or longer is formed with the light beam in conformity with a recording waveform in which a front-end portion and a rear-end portion of the recording waveform are set to have high first recording light intensity and an intermediate portion of the recording waveform is set to have second recording light intensity not higher than the first recording light intensity, whereby the mark is formed, the method comprising:

   (a) changing the second recording light intensity step by step by a predetermined amount while maintaining the first recording light intensity at a constant value, and recording a light intensity learning pattern composed of a plurality of marks including an approximately longest mark in the light intensity learning region;
   (b) detecting a degree of modulation of a reproduced signal of each of the plural marks in the recorded light intensity learning pattern;
   (c) detecting a waveform distortion amount of a reproduced signal of the approximately longest mark in the recorded light intensity learning pattern;
   (d) obtaining recording light intensity corresponding to an allowable upper limit degree of modulation based on the detected degree of modulation and the allowable upper limit degree of modulation;
   (e) obtaining recording light intensity corresponding to a target waveform distortion amount based on the detected waveform distortion amount and the target waveform distortion amount;
   (f) comparing the recording light intensity corresponding to the allowable upper limit degree of modulation with the recording light intensity corresponding to the target waveform distortion amount; and
   (g) setting the recording light intensity corresponding to the target waveform distortion amount as the second recording light intensity, and determining a ratio between the first recording light intensity and the set second recording light intensity as an optimum light intensity ratio when the recording light intensity corresponding to the allowable upper limit degree of modulation is not lower than the recording light intensity corresponding to the target waveform distortion amount.

12. The method for learning recording light intensity according to claim 10, further comprising (h) setting a part of the intermediate portion of the recording waveform to have the first recording light intensity when the recording light intensity corresponding to the allowable upper limit degree of modulation is lower than the recording light intensity corresponding to the target waveform distortion amount and the intermediate portion is set to have the second recording light intensity.

13. The method for learning recording light intensity according to claim 12, further comprising (i) extending a time period of the part of the intermediate portion of the recording waveform when the recording light intensity corresponding to the allowable upper limit degree of modulation is lower than the recording light intensity corresponding to the target waveform distortion amount and the part of the intermediate portion is set to have the first recording light intensity.

FIG.1

Start of learning recording power

Read initial record information necessary for learning
recording power from target recording medium   S201

Set record information necessary for learning recording power
(recording start power Po, recording power ratio ε ,
recording power increment ΔPo, recording
waveform for learning recording power, etc.)   S202

Move to recording power learning region   S203

Record data for learning recording power at
recording powers Po(i), Pm(i) (i = 1, 2,···), a recording power
ratio there between being maintained at a constant value   S204

Reproduce data for learning recording power   S205

S206             S208

Detect degree of modulation m
from reproduced signal

Detect waveform distortion
amount $\zeta$ from reproduced signal

Calculate recording power Po_ms
corresponding to allowable upper
limit degree of modulation ms

Calculate recording power Po_$\zeta$ s
corresponding to allowable
waveform distortion amount $\zeta$ s

S207       S10       S209

Yes    Po_ms $\geqq$ Po_$\zeta$ s    No

S211

Determine allowable recording
Power range to be a range
from Po_$\zeta$ s to Po_ms .

No     Intermediate pulse
inserted   S213

Determine optimum recording
power Pw within allowable
recording power range

Yes    S215

Increase width of
intermediate pulse

S212

End of learning recording power

Insert intermediate pulse   S214

FIG.2

FIG.3

EP 1 638 091 A1

FIG.4

(a) Record data waveform

(b) Laser driving signal waveform

(c) Record mark

(d) Reproduced waveform

11T

T

Po

Pm

Track groove

Light

FIG.5

EP 1 638 091 A1

FIG.6

FIG.7

FIG.8

FIG.9

EP 1 638 091 A1

Start of learning recording power

Read initial record information necessary for learning recording power from target recording medium — S201

Set recording information necessary for learning recording power (first recording power Po, second recording start power Pm, second recording power increment ΔPm, recording waveform for learning recording power, etc.) — S302

Move to recording power learning region — S203

Record data for learning recording power at recording powers Po(i), Pm(i) (i = 1, 2,···), a recording power ratio there between being maintained at a constant value — S304

Reproduce data for learning recording power — S205

S306
Detect degree of modulation m from reproduced signal

S308
Detect waveform distortion amount $\zeta$ from reproduced signal

S307
Calculate recording power Pm_ms corresponding to allowable upper limit degree of modulation ms

S309
Calculate recording power Pm_$\zeta$t corresponding to allowable waveform distortion amount $\zeta$t

S310
Yes — Po_ms ≧ Po_$\zeta$s — No

S311
Determine recording power ratio (Po/Pm_$\zeta$t) corresponding to target waveform distortion amount $\zeta$t in learning power as optimum recording power ratio

S213
No — Intermediate pulse inserted — Yes

S215
Increase width of intermediate pulse

S214
Insert intermediate pulse

End of learning recording power

FIG.10

FIG.11

EP 1 638 091 A1

FIG.12

EP 1 638 091 A1

FIG.13

FIG.14

FIG.15

FIG.16

FIG.17

FIG.18

FIG.19

(a) Record data waveform

(b) Recording waveform

(c) Laser light emission waveform

(d) Record mark

Track groove

(e) Reproduced waveform

FIG.20

(a) Record data
waveform

(b) Recording
waveform

(c) Laser light
emission waveform

(d) Record mark

Track groove

(e) Reproduced
waveform

FIG.21

| **INTERNATIONAL SEARCH REPORT** | International application No. |
|---|---|
| | PCT/JP2004/009042 |

**A. CLASSIFICATION OF SUBJECT MATTER**
Int.Cl⁷ G11B7/0045, 7/125

According to International Patent Classification (IPC) or to both national classification and IPC

**B. FIELDS SEARCHED**

Minimum documentation searched (classification system followed by classification symbols)
Int.Cl⁷ G11B7/0045, 7/125

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-307326 A (Teac Corp.), 02 November, 2001 (02.11.01), Full text; Figs. 1 to 8 & US 2001/33534 A1 | 1-13 |
| A | JP 2002-100045 A (Pioneer Electronic Corp.), 05 April, 2002 (05.04.02), Full text: Figs. 1 to 13 & EP 1197959 A3 & US 2002/36963 A1 | 1-13 |
| A | JP 2003-173560 A (Matsushita Electric Industrial Co., Ltd.), 20 June, 2003 (20.06.03), Full text; Figs. 1 to 13 (Family: none) | 1-13 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 November, 2004 (10.11.04) | 30 November, 2004 (30.11.04) |

| Name and mailing address of the ISA/ | Authorized officer |
|---|---|
| Japanese Patent Office | |
| Facsimile No. | Telephone No. |

Form PCT/ISA/210 (second sheet) (January 2004)